# EUROPEAN PATENT APPLICATION

(11) **EP 3 989 170 A1**
(43) Date of publication of application: **27.04.2022**
(21) Application number: 20826498.6
(22) Date of filing: 19.06.2020
(51) Int. Cl.: G06T 7/73

(54) **VEHICLE POSITION AND POSTURE DETERMINATION METHOD AND APPARATUS, AND ELECTRONIC DEVICE**

(30) Priority: 20.06.2019 CN 201910537501
(71) Applicant: Hangzhou Hikvision Digital Technology Co., Ltd., Hangzhou, Zhejiang 310051 (CN)
(72) Inventor: HU, Bing, Hangzhou, Zhejiang 310051 (CN); LV, Jixin, Hangzhou, Zhejiang 310051 (CN); MENG, Chao, Hangzhou, Zhejiang 310051 (CN)
(74) Representative: BRP Renaud & Partner mbB Rechtsanwälte Patentanwälte Steuerberater
(86) International application number: PCT/CN2020/097180
(87) International publication number: WO 2020/253842

(57) **Abstract**

The embodiments of the present application provides a method for determining position-orientation of a vehicle, apparatus, and electronic device. Wherein the to-be-positioned vehicle is provided with an around-view camera, which is configured for capturing an aerial view of the scene where the to-be-positioned vehicle is located, the method comprises: performing semantic segmentation on the aerial view to obtain local semantic information of the scene where the to-be-positioned vehicle is located; determining, according to global semantic information of a preset area including the scene where the to-be-positioned vehicle is located, a position-orientation matching the local semantic information in the preset area as a position-orientation of the to-be-positioned vehicle. Semantic information can be extracted from an aerial view captured by an around-view camera to obtain characteristics of the scene where the to-be-positioned vehicle is located, and then determine a position-orientation of the to-be-positioned vehicle through map matching. The position-orientation can be determined without the aid of GPS signals. Therefore, the position-orientation can be accurately determined even in a scene where GPS signals cannot be received normally.

## Description

The present application claims the priority to a Chinese patent application No. 201910537501.6, filed with the China National Intellectual Property Administration on June 20, 2019 and entitled "Method for determining position-orientation of a vehicle, apparatus, and electronic device", which is incorporated herein by reference in its entirety.

### Technical Field

The present application relates to the field of image analysis technology, and in particular, to a method for determining position-orientation of a vehicle, apparatus, and electronic device.

### Background

In some application scenes, it may be necessary to determine the position-orientation (position and orientation angle) of the vehicle with high precision and high frequency. For example, in the unmanned system, for the sake of safety, it is necessary to determine the position-orientation of the vehicle with high precision and high frequency.

In related technologies, GPS (Global Position System) sensors can be installed on the vehicle to determine the position-orientation of the vehicle. However, the GPS sensor needs to receive the GPS signal sent by the GPS base station to be able to work normally. In some application scenes, the vehicle may be in a scene with a poor signal, such as an underground parking lot, and the GPS sensor may not be able to receive the GPS signal normally, resulting in the inability to determine the position-orientation of the vehicle.

### Summary

The position-orientation of the embodiments of the present application is to provide a method for determining position-orientation of a vehicle, apparatus, and electronic device, so as to accurately determine the position-orientation in a scene where GPS signals cannot be received normally. The technical solutions are as follows.

In a first aspect of the embodiments of the present application, a method for determining position-orientation of a vehicle is provided, a to-be-positioned vehicle is provided with an around-view camera, and the method includes:
performing semantic segmentation on the aerial view to obtain local semantic information of the scene where the to-be-positioned vehicle is located;
determining, according to global semantic information of a preset area comprising the scene where the to-be-positioned vehicle is located, a position-orientation matching the local semantic information in the preset area as a position-orientation of the to-be-positioned vehicle.

In a possible embodiment, performing semantic segmentation on the aerial view to obtain local semantic information of a scene where the to-be-positioned vehicle is located, includes:
performing semantic segmentation on the aerial view to obtain a semantic point cloud of the scene where the to-be-positioned is located as local semantic information, wherein the semantic point cloud is used to represent geometric information and semantic information of each of spatial points, and the semantic information represents an identification type corresponding to each of spatial points;
determining, according to global semantic information of a preset area comprising the scene where the to-be-positioned vehicle is located, a position-orientation matching the local semantic information in the preset area as a position-orientation of the to-be-positioned vehicle, comprises:
   matching, based on the geometric information and semantic information represented by the local semantic information, the local semantic information with the global semantic information of a preset area to obtain a position-orientation matching the local semantic information in the preset area as the position-orientation of the to-be-positioned vehicle, the global semantic information is a semantic point cloud of the preset area.

In a possible embodiment, the identification type includes: a lane line, a parking space frame, a stop line, a speed bump, a road arrow, and a parking space number.

In a possible embodiment, the around-view camera includes a plurality of fish-eye cameras, and the plurality of fish-eye cameras are respectively set in different directions of the to-be-positioned vehicle for capturing images in corresponding directions;
before performing semantic segmentation on the aerial view to obtain local semantic information of a scene where the to-be-positioned vehicle is located, the method further comprises:
transforming and splicing, according to a principle of inverse perspective transformation, the images captured by the plurality of fish-eye cameras, to obtain an aerial view of the scene where the to-be-positioned vehicle is located.

In a possible embodiment, the to-be positioned vehicle is further provided with a position-orientation sensor for measuring relative position-orientations of the to-be-positioned vehicle at different time nodes;
performing semantic segmentation on the aerial view to obtain local semantic information of a scene where the to-be-positioned vehicle is located, comprises:
performing semantic segmentation on aerial views captured at multiple time nodes comprising current moment, to obtain pieces of semantic information of scenes where the to-be-positioned vehicle is located at the multiple time nodes;
obtaining sensing relative position-orientations at the multiple time nodes, where the sensing relative position-orientations are obtained by reading the position-orientation sensor;
superimposing the pieces of semantic information of the scenes where the to-be-positioned vehicle is located at the multiple time nodes based on the sensing relative position-orientations of the to-be-positioned vehicle at the multiple time nodes to obtain a superimposition result;
filtering the superposition result to obtain semantic information of the scene where the to-be-positioned vehicle is located in a time window comprising the current moment as local semantic information.

In a second aspect of the embodiments of the present application, an apparatus for determining position-orientation of a vehicle is provided, the to-be-positioned vehicle is provided with an around-view camera, which is used to capture an aerial view of the scene where the to-be-positioned vehicle is located, the apparatus includes:
a semantic segmentation module, configured for performing semantic segmentation on the aerial view to obtain local semantic information of a scene where the to-be-positioned vehicle is located;
a semantic matching module, configured for determining, according to global semantic information of a preset area comprising the scene where the to-be-positioned vehicle is located, a position-orientation matching the local semantic information in the preset area as a position-orientation of the to-be-positioned vehicle.

In a possible implementation, the semantic segmentation module is specifically configured for performing semantic segmentation on the aerial view to obtain a semantic point cloud of the scene where the to-be-positioned is located as local semantic information, wherein the semantic point cloud is used to represent geometric information and semantic information of each of spatial points, and the semantic information represents an identification type corresponding to each of spatial points;
the semantic matching module is specifically configured for matching, based on the geometric information and semantic information represented by the local semantic information, the local semantic information with the global semantic information of a preset area to obtain a position-orientation matching the local semantic information in the preset area as the position-orientation of the to-be-positioned vehicle, the global semantic information is a semantic point cloud of the preset area.

In a possible implementation, the semantic segmentation module is specifically configured for performing semantic segmentation on the aerial view to obtain a semantic point cloud of the scene where the to-be-positioned is located as local semantic information, wherein the semantic point cloud is used to represent geometric information and semantic information of each of spatial points, and the semantic information represents an identification type corresponding to each of spatial points;
the semantic matching module is specifically configured for matching, based on the geometric information and semantic information represented by the local semantic information, the local semantic information with the global semantic information of a preset area to obtain a position-orientation matching the local semantic information in the preset area as the position-orientation of the to-be-positioned vehicle, the global semantic information is a semantic point cloud of the preset area.

In a possible implementation, the identification type includes: a lane line, a parking space frame, a stop line, a speed bump, a road arrow, and a parking space number.

In a possible implementation, the around-view camera includes a plurality of fish-eye cameras, and the plurality of fish-eye cameras are respectively set in different directions of the to-be-positioned vehicle for capturing images in corresponding directions;
the apparatus further comprises an image splicing module, which is configured for, before performing semantic segmentation on the aerial view to obtain local semantic information of a scene where the to-be-positioned vehicle is located,
transforming and splicing, according to a principle of inverse perspective transformation, the images captured by the plurality of fish-eye cameras, to obtain an aerial view of the scene where the to-be-positioned vehicle is located.

In a possible implementation, the to-be positioned vehicle is further provided with a position-orientation sensor for measuring relative position-orientations of the to-be-positioned vehicle at different time nodes;
the semantic segmentation module is specifically configured for performing semantic segmentation on aerial views captured at multiple time nodes comprising current moment, to obtain pieces of semantic information of the scenes where the to-be-positioned vehicle is located at the multiple time nodes;
obtaining sensing relative position-orientations at the multiple time nodes, where the sensing relative position-orientations are obtained by reading the position-orientation sensor;
superimposing the pieces of semantic information of the scenes where the to-be-positioned vehicle is located at the multiple time nodes based on the sensing relative position-orientations of the to-be-positioned vehicle at the multiple time nodes to obtain a superimposition result;
filtering the superposition result to obtain semantic information of the scene where the to-be-positioned vehicle is located in a time window comprising the current moment as local semantic information.

In a possible implementation, the semantic segmentation module is further configured for , after performing semantic segmentation on aerial views captured at multiple time nodes comprising current moment to obtain pieces of semantic information of the scenes where the to-be-positioned vehicle is located at the multiple time nodes, obtaining visual relative position-orientations at multiple time nodes, the visual relative position-orientations are obtained by matching pieces of semantic information of multiple time nodes;
fusing the sensing relative position-orientations and the visual relative position-orientations to obtain fusion relative position-orientations;
the semantic segmentation module is specifically configured for superimposing the pieces of semantic information of the scenes where the to-be-positioned vehicle is located at the multiple time nodes based on the fusion relative position-orientations of the to-be-positioned vehicle at the multiple time nodes to obtain a superimposition result.

In a possible implementation, the semantic matching module is specifically configured for estimating, based on determined locations of the to-be-positioned vehicle at historical moments, a location of the to-be-positioned vehicle at current moment as a estimated location;
determining, according to a priori semantic information within a preset range of the estimated position in the preset area, a position-orientation matching the local semantic information in the preset range as a position-orientation of the to-be-positioned vehicle.

In a third aspect of the embodiments of the present application, an electronic device is provided, including:
a memory, configured for storing computer programs;
a processor, configured for performing method steps of any of the first aspect when executing the programs stored on the memory.

In a fourth aspect of the embodiments of the present application, there is provided a computer-readable storage medium having computer programs stored thereon which, when executed by a processor, cause the processor to implement the method steps of any of the first aspect.

In a fifth aspect of the embodiments of the present application, a vehicle position-orientation around-view system is provided, including: an around-view camera and at least one processor, the around-view camera is configured for capturing an aerial view of the scene where the to-be-positioned vehicle is located, the processor is configured for: performing semantic segmentation on the aerial view to obtain local semantic information of the scene where the to-be-positioned vehicle is located; determining, according to global semantic information of a preset area comprising the scene where the to-be-positioned vehicle is located, a position-orientation matching the local semantic information in the preset area as a position-orientation of the to-be-positioned vehicle.

The method for determining position-orientation of a vehicle, apparatus, and electronic device provided by the embodiments of the present application can extract semantic information from an aerial view captured by an around-view camera to obtain characteristics of the scene where the to-be-positioned vehicle is located, and then determine a position-orientation of the to-be-positioned vehicle through map matching. The position-orientation can be determined without the aid of GPS signals. Therefore, the position-orientation can be accurately determined even in a scene where GPS signals cannot be received normally. Of course, implementing any product or method of the present application does not necessarily need to achieve all the advantages described above at the same time.

### Brief Description of the Drawings

In order to more clearly describe the technical solution of the embodiments of the application or of the prior art, drawings needed in the embodiments and the prior art will be briefly described below. Obviously, the drawings described below are for only some embodiments of the present application, one of ordinary skills in the art can also obtain other drawings based on these drawings without any creative efforts.
Fig. 1 is a flow diagram of a method for determining position-orientation of a vehicle according to an embodiment of the present application;
Fig. 2 is another flow diagram of a method for determining position-orientation of a vehicle according to an embodiment of the present application;
Fig. 3 is a principle diagram of determining position-orientation of a vehicle according to an embodiment of the present application;
Fig. 4 is a structural diagram of an apparatus for determining position-orientation of a vehicle according to an embodiment of the present application;
Fig. 5 is a structural diagram of an electronic device for determining position-orientation of a vehicle according to an embodiment of the present application.

### Detailed Description

The technical solution of the application will be described in detail with reference to the drawings of embodiments of the present application. Obviously, the embodiments described are only some instead of all of the embodiments of the present application. All other embodiments obtained by those of ordinary skills in the art based on the embodiments herein without any creative efforts are within the scope of the present application.

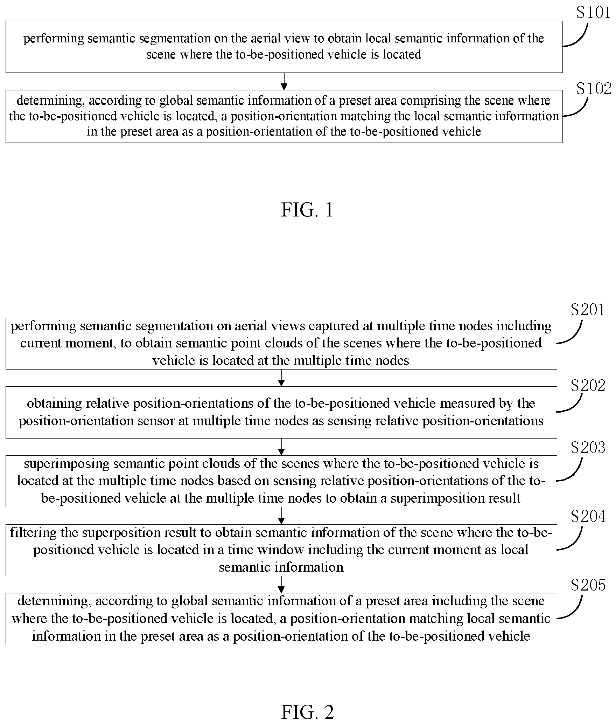

In the embodiment of the present application, the to-be-positioned vehicle is provided with an around-view camera for capturing an aerial view of the scene where the to-be-positioned vehicle is located. The setting mode of the around-view camera can be different according to different application scenes, which is not limited in this embodiment. Referring to Fig. 1, which is a flow diagram of a method for determining position-orientation of a vehicle according to an embodiment of the present application, it may include:
S101, performing semantic segmentation on an aerial view to obtain local semantic information of a scene where a to-be-positioned vehicle is located.

The local semantic information can be used to represent an identification type and location information identified in the scene where the to-be-positioned vehicle is located. For example, the local semantic information can represent that a spatial point with spatial coordinates (1,2,3) in the scene where the to-be-positioned vehicle is located belongs to a stop line. The representation mode of local semantic information can be different according to different application scenes, which is not limited in this embodiment.

In one possible embodiment, the local semantic information may be represented in the form of a semantic point cloud. The semantic point cloud is used to represent the geometric information and semantic information of each of spatial points, and the semantic information is used to represent an identification type corresponding to each of spatial points. The identification type can be different according to different application scenes. For example, in a possible application scenario, the identification type may include one or more of ground identification such as a lane line, a parking space frame, a stop line, a speed bump, a road arrow, and a parking space number, etc. The semantic point cloud can be regarded as a collection of multiple points. Each point can be represented in the form of (loc, label), where "loc" represents spatial coordinates of the point and "label" represents a label corresponding to the identification type corresponding to the point. For example, there is a point with spatial coordinates of (3, 2, 0) and the point belongs to the stop line. Assuming that the label corresponding to the stop line is 2, then the point in the semantic point cloud can be expressed as (3, 2, 0, 2).

S102, determining, according to global semantic information of a preset area including the scene where the to-be-positioned vehicle is located, a position-orientation matching local semantic information in the preset area as a position-orientation of the to-be-positioned vehicle.

The representation mode of the global semantic information is the same as that of the local semantic information. For example, assuming that the local semantic information is expressed in the form of semantic point cloud, the global semantic information is also expressed in the form of semantic point cloud.

The matching of position-orientation and local semantic information can mean that the theoretically measurable local semantic information can be matched with the actually measured local semantic information in S101 based on the global semantic information and assuming that the to-be-positioned vehicle is located in the position-orientation.

According to the different representation modes of semantic information, the way to determine the position-orientation matching with local semantic confidence can also be different. It can be the following operation: matching, based on the geometric information and semantic information represented by the local semantic information, the local semantic information with the global semantic information of a preset area to obtain a position-orientation matching the local semantic information in the preset area as the position-orientation of the to-be-positioned vehicle. For convenience of description, the global semantic information and local semantic information are represented in the form of semantic point cloud as an example, which can include the following steps:
step 1, matching local semantic information with preset global semantic information based on the geometric information and semantic information represented by the local semantic information to obtain a matching point pair between the local semantic information and the global semantic information.

If a point in the local semantic information matches the geometric information and the semantic information of a point in the global semantic information, it can be considered that the two points correspond to the same spatial point, that is, the two points form an association relationship.

In other optional embodiments, a location of the to-be-positioned vehicle at current moment can be estimated as a estimated location based on determined locations of the to-be-positioned vehicle at historical moments. For example, assuming that the to-be-positioned vehicle is in location A when t = 10s and the current moment is t = 15s, a relative position-orientation change within 5s can be read from the position-orientation sensor to obtain the estimated location A'. Then, the semantic information within the preset range near position A' is intercepted from the global semantic information as a priori semantic information, and the matching point pair of local semantic information and a priori semantic information is obtained by matching the priori semantic information with the local semantic information. It can be understood that since the priori semantic information is a part of the global semantic information, therefore, the matching point pair of local semantic information and the priori semantic information can be regarded as the matching point pair of local semantic information and global semantic information. At the same time, a priori semantic information is a part of global semantic information, so the amount of calculation required to complete the matching between local semantic information and a priori semantic information is lower than that required to complete the matching between local semantic information and global semantic information.

Step 2, determining the position-orientation of the to-be-positioned vehicle in the spatial coordinate system of global semantic information based on a coordinate transformation relationship of the matching point pair.

For the convenience of description, assuming that the spatial coordinate system of global semantic information is the global coordinate system, and the spatial coordinate system of local semantic information is the local coordinate system. It can be understood that a matching point pair includes a point in the global semantic information and a matching point in the local semantic information. As analyzed above, these two points theoretically represent the same point in the space, but are represented by the coordinates in the global coordinate system and the coordinates in the local coordinate system respectively. Therefore, by synthesizing multiple matching point pairs, the coordinate transformation relationship between the global coordinate system and the local coordinate system can be determined.

A relative position relationship between the to-be-positioned vehicle and the around-view camera can be considered as fixed and known, and the local semantic information is the semantic point cloud of the scene where the to-be-positioned vehicle is located constructed based on the aerial view captured by the around-view camera. Therefore, it can be considered that local coordinates and orientation angle of the to-be-positioned vehicle in the local coordinate system are known. Then, based on a coordinate conversion relationship between the global coordinate system and the local coordinate system reflected by the matching point pair, the global coordinates and orientation angle of the to-be-positioned vehicle in the global coordinate system can be determined, that is, the position-orientation of the to-be-positioned vehicle can be determined.

By this embodiment, it can extract semantic information from an aerial view captured by an around-view camera to obtain characteristics of the scene where the to-be-positioned vehicle is located, and then determine a position-orientation of the to-be-positioned vehicle through map matching. The position-orientation can be determined without the aid of GPS signals. Therefore, the position-orientation can be accurately determined even in a scene where GPS signals cannot be received normally.

In one possible embodiment, a laser locator and/or an acoustic locator may be provided on the vehicle to determine the position-orientation through the laser locator and/or the acoustic locator. However, the cost of laser locator and acoustic locator is often high. By selecting the method for determining position-orientation of a vehicle provided in the embodiment of the present application, the position-orientation determination can be realized without the help of a laser locator and an acoustic locator. Moreover, since the cost of image acquisition device required for capturing the aerial view is often lower than that of laser locator and acoustic locator, compared with relevant technologies, the solution of position-orientation determination using laser locator and/or acoustic locator can effectively reduce the cost of position-orientation determination.

Referring to Fig. 2, which shows another flow diagram of a method for determining position-orientation of a vehicle according to an embodiment of the present application, in which a to-be-positioned vehicle is provided with a position-orientation sensor and an around-view camera, and the position-orientation sensor is used to measure a relative position-orientation of the to-be-positioned vehicle at different time nodes. The method may include:
S201, performing semantic segmentation on an aerial views captured at multiple time nodes including current moment, to obtain semantic point clouds of the scenes where the to-be-positioned vehicle is located at the multiple time nodes.

For convenience of description, assuming that the current moment is *t1,* and multiple time nodes are {*t1*, *t2*..., *tn*}, and the aerial view captured on *ti* is called aerial view i, the semantic point cloud of the scene where the to-be-positioned vehicle is located at *ti* is called semantic point cloud i, wherein i is any positive integer in [1, n].

The semantic segmentation on different aerial views can be performed at different time, or at the same time. For example, the semantic segmentation can be performed on the captured aerial view after each aerial view is captured, or the semantic segmentation can be performed on the captured aerial views 1-n in parallel after the aerial views 1-n are captured, this embodiment is not limited to this.

S202, obtaining relative position-orientations of the to-be-positioned vehicle measured by the position-orientation sensor at multiple time nodes as sensing relative position-orientations.

The position-orientation sensor may include IMU (inertial measurement unit) and wheel speed counter. Wherein, IMU is used to measure a three-axis acceleration and an angular velocity of a vehicle, and the wheel speed counter is used to measure the number of revolutions of a wheel of the vehicle, and calculate a moving distance of the vehicle based on the measured revolution number. The relative position-orientation of the to-be-positioned vehicle at a time node can be a change amount of the position-orientation of the to-be-positioned vehicle at the time node in relative to the position-orientation of the to-be-positioned vehicle at a time node before the time node. When the three-axis acceleration, angular velocity and moving distance of the vehicle are known, the change amount of the vehicle's motion in a specified time window can be calculated, therefore the position-orientation sensor can measure the relative position-orientation of the to-be-positioned vehicle.

It can be understood that in some embodiments, sampling frequencies of the position-orientation sensor and the around-view camera may be different, therefore a time synchronization unit can be set to synchronize the aerial view collected by the around-view camera and the relative position-orientation measured by the position-orientation sensor.

S203, superimposing semantic point clouds of the scenes where the to-be-positioned vehicle is located at the multiple time nodes based on sensing relative position-orientations of the to-be-positioned vehicle at the multiple time nodes to obtain a superimposition result.

For the convenience of description, the sensing relative position-orientation of the to-be-positioned vehicle at *ti* is called *loci*, then the semantic point cloud 1 can be set at *loc1*, the superimposed semantic point cloud 2 can be set at *loc2...* and so on until the superimposed semantic point cloud *n* is set at *locn* to obtain a superimposed result.

It can be understood that the position-orientation sensor may have certain errors. Taking the position-orientation sensor including IMU and wheel speed counter as an example, the IMU and wheel speed counter may have cumulative errors and random fluctuations, resulting in inaccurate measured three-axis acceleration, angular velocity and vehicle motion distance. Based on the inaccurate three-axis acceleration, angular velocity and vehicle motion distance, the obtained relative position-orientation is not accurate enough, that is, there may be some errors in the sensing relative position-orientation.

In view of this, in an optional embodiment, the semantic point clouds of the scenes where the to-be-positioned vehicle is located at multiple time nodes can be matched to obtain relative position-orientations of the to-be-positioned vehicle at multiple time nodes as visual relative position-orientations. The sensing relative position-orientations and the visual relative position-orientations are fused to obtain fusion relative position-orientations.

Since the fusion position-orientations integrate the visual relative position-orientations based on semantic point cloud matching, the fusion relative position-orientations can be regarded as correction results obtained by correcting the sensing relative position-orientations based on the visual relative position-orientations. Therefore, the fusion relative position-orientations are more accurate than the sensing relative position-orientations. Therefore, based on the fusion relative position-orientations, the semantic point clouds of the scenes where the to-be-positioned vehicle at multiple time nodes are superimposed, which can make the superimposed result more accurate.

S204, filtering the superposition result to obtain semantic information of the scene where the to-be-positioned vehicle is located in a time window including the current moment as local semantic information.

An algorithm used for filtering can be different according to different application scenes, which is not limited in this embodiment. Since the superposition result is semantic point clouds of the scenes where the to-be-positioned vehicle is located at multiple time nodes including the current moment, the filtered result can be regarded as the semantic point cloud of the scene where the to-be-positioned vehicle is located in a time window including the current moment, or the semantic point cloud of the scene within a distance of the nearest movement of the to-be-positioned vehicle.

S205, determining, according to global semantic information of a preset area including the scene where the to-be-positioned vehicle is located, a position-orientation matching local semantic information in the preset area as a position-orientation of the to-be-positioned vehicle.

This step is the same as S102. Please refer to the relevant description of S 102 and will not be repeated here.

It can be understood that the geometric information and semantic information contained in the semantic point cloud of the scene where the to-be-positioned vehicle at the current moment are often limited, which may lead to multiple position-orientations matching with the local semantic information in the global semantic information, which can lead to the inaccurate matching of the local semantic information with the global semantic information. By selecting this embodiment, the geometric information and semantic information contained in the local semantic information can be increased by superimposing the semantic point cloud of the scene at multiple different time nodes, so as to reduce the possibility of multiple position-orientations matching with the local semantic information in the global semantic information, so that the local semantic information can be more accurately matched with the global semantic information, so as to improve the accuracy of the determined position-orientation.

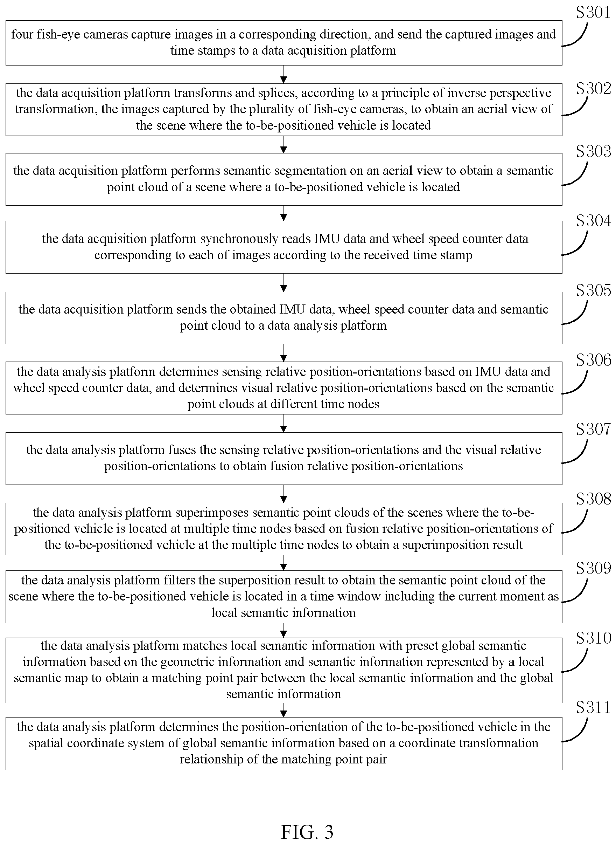

The method for determining position-orientation of a vehicle provided by the embodiment of the present application will be described below in combination with the specific application scene. In a possible embodiment, the around-view camera includes four fish-eye cameras (the number of fish-eye cameras included in other optional embodiments can also be different), which are respectively arranged around the to-be-positioned vehicle. The to-be-positioned vehicle is also provided with IMU and wheel speed counter. It may refer to Fig. 3, which includes:
S301, four fish-eye cameras capture images in a corresponding direction, and send the captured images and time stamps to a data acquisition platform.

Wherein, the data acquisition platform can be set on the vehicle or on a network device with communication connection with the vehicle. The image sent by the fisheye camera contains a timestamp used to represent capturing time.

S302, the data acquisition platform transforms and splices, according to a principle of inverse perspective transformation, the images captured by the plurality of fish-eye cameras, to obtain an aerial view of the scene where the to-be-positioned vehicle is located.

For example, supposition-orientation that four fish-eye cameras respectively capture images in the corresponding direction when t = 10s, and according to the principle of inverse perspective transformation, the images in the corresponding direction captured by the four fish-eye cameras when t = 10s are changed and spliced, to obtain an aerial view of the scene where the to-be-positioned vehicle is located when t = 10s.

S303, the data acquisition platform performs semantic segmentation on an aerial view to obtain a semantic point cloud of a scene where a to-be-positioned vehicle is located.

This step is the same as S101. Please refer to the previous description of S101 and will not be repeated here.

S304, the data acquisition platform synchronously reads IMU data and wheel speed counter data corresponding to each of images according to the received time stamp.

Wherein, IMU data is the data measured by IMU, and wheel speed counter data is the data measured by the wheel speed counter. For example, assuming that the time stamp of an image is t = 10s, the data acquisition platform can read a reading of IMU at t = 10s as IMU data, and read the reading of the wheel speed counter at t = 10s as the reading of the wheel speed counter.

S305, the data acquisition platform sends the obtained IMU data, wheel speed counter data and semantic point cloud to a data analysis platform.

Wherein, the data analysis platform can be set on the vehicle or on the network device with communication connection with the vehicle.

S306, the data analysis platform determines sensing relative position-orientations based on IMU data and wheel speed counter data, and determines visual relative position-orientations based on the semantic point clouds at different time nodes.

For the sensing relative position-orientation and visual relative position-orientation, please refer to the relevant descriptions in S202 and S203, which will not be repeated here.

S307, the data analysis platform fuses the sensing relative position-orientations and the visual relative position-orientations to obtain fusion relative position-orientations.

For the fusion relative position-orientations, please refer to the relevant descriptions in S203, which will not be repeated here.

S308, the data analysis platform superimposes semantic point clouds of the scenes where the to-be-positioned vehicle is located at multiple time nodes based on fusion relative position-orientations of the to-be-positioned vehicle at the multiple time nodes to obtain a superimposition result.

S309, the data analysis platform filters the superposition result to obtain the semantic point cloud of the scene where the to-be-positioned vehicle is located in a time window including the current moment as local semantic information.

S310, the data analysis platform matches local semantic information with preset global semantic information based on the geometric information and semantic information represented by a local semantic map to obtain a matching point pair between the local semantic information and the global semantic information.

Please refer to the relevant descriptions in S102, which will not be repeated here.

S311, the data analysis platform determines the position-orientation of the to-be-positioned vehicle in the spatial coordinate system of global semantic information based on a coordinate transformation relationship of the matching point pair.

Please refer to the relevant descriptions in S102, which will not be repeated here.

In this embodiment, the data acquisition platform and data analysis platform can be two independent physical devices, or two different virtual devices integrated on the same electronic device, which is not limited in this embodiment. In an optional embodiment, it may also include a data display platform for displaying the vehicle according to the position-orientation determined by the data analysis platform.

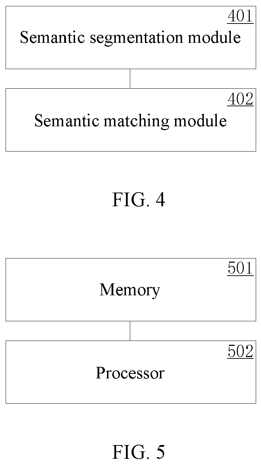

Referring to Fig. 4, which is a structural diagram of an apparatus for determining position-orientation of a vehicle according to an embodiment of the present application, it may include:
a semantic segmentation module 401, configured for performing semantic segmentation on the aerial view to obtain local semantic information of a scene where the to-be-positioned vehicle is located;
a semantic matching module 402, configured for determining, according to global semantic information of a preset area including the scene where the to-be-positioned vehicle is located, a position-orientation matching local semantic information in the preset area as a position-orientation of the to-be-positioned vehicle.

In an optional embodiment, the semantic segmentation module 401 is specifically configured for performing semantic segmentation on the aerial view to obtain semantic point cloud of the scene where the to-be-positioned is located as local semantic information, wherein the semantic point cloud is used to represent geometric information and semantic information of each of spatial points, and the semantic information represents an identification type corresponding to each of spatial points;
the semantic matching module 402 is specifically configured for matching, based on the geometric information and semantic information represented by the local semantic information, the local semantic information with the global semantic information of a preset area to obtain a position-orientation matching the local semantic information in the preset area as the position-orientation of the to-be-positioned vehicle, the global semantic information is the semantic point cloud of the preset area.

In an optional embodiment, the identification type includes: a lane line, a parking space frame, a stop line, a speed bump, a road arrow, and a parking space number.

In an optional embodiment, the around-view camera includes a plurality of fish-eye cameras, and the plurality of fish-eye cameras are respectively set in different directions of the to-be-positioned vehicle for capturing images in corresponding directions;
the apparatus further comprises an image splicing module, which is configured for, before performing semantic segmentation on the aerial view to obtain local semantic information of a scene where the to-be-positioned vehicle is located,
transforming and splicing, according to a principle of inverse perspective transformation, the images captured by the plurality of fish-eye cameras, to obtain an aerial view of the scene where the to-be-positioned vehicle is located.

In an optional embodiment, the to-be positioned vehicle is further provided with a position-orientation sensor for measuring relative position-orientations of the to-be-positioned vehicle at different time nodes;
the semantic segmentation module 401 is specifically configured for performing semantic segmentation on aerial views captured at multiple time nodes comprising current moment, to obtain pieces of semantic information of the scenes where the to-be-positioned vehicle is located at the multiple time nodes;
obtaining sensing relative position-orientations at the multiple time nodes, where the sensing relative position-orientations are obtained by reading the position-orientation sensor;
superimposing the pieces of semantic information of the scenes where the to-be-positioned vehicle is located at the multiple time nodes based on the sensing relative position-orientations of the to-be-positioned vehicle at the multiple time nodes to obtain a superimposition result;
filtering the superposition result to obtain semantic information of the scene where the to-be-positioned vehicle is located in a time window comprising the current moment as local semantic information.

In a possible embodiment, the semantic segmentation module 401 is further configured for, after performing semantic segmentation on aerial views captured at multiple time nodes comprising current moment to obtain pieces of semantic information of the scenes where the to-be-positioned vehicle is located at the multiple time nodes, obtaining visual relative position-orientations at multiple time nodes, the visual relative position-orientations are obtained by matching pieces of semantic information of multiple time nodes;
fusing the sensing relative position-orientations and the visual relative position-orientations to obtain fusion relative position-orientations;
the semantic segmentation module 401 is specifically configured for superimposing the pieces of semantic information of the scenes where the to-be-positioned vehicle is located at the multiple time nodes based on the fusion relative position-orientations of the to-be-positioned vehicle at the multiple time nodes to obtain a superimposition result.

In a possible embodiment, the semantic matching module 402 is specifically configured for estimating, based on determined locations of the to-be-positioned vehicle at historical moments, a location of the to-be-positioned vehicle at current moment as a estimated location;
determining, according to a priori semantic information within a preset range of the estimated position in the preset area, a position-orientation matching the local semantic information in the preset range as a position-orientation of the to-be-positioned vehicle.

The embodiment of the present application also provides an electronic device, as shown in Fig. 5, the electronic device includes:
the memory 501 is configured for storing computer programs;
the processor 502 is configured for implementing the following steps when executing the programs stored on the memory 501:
   performing semantic segmentation on the aerial view to obtain local semantic information of the scene where the to-be-positioned vehicle is located;
   determining, according to global semantic information of a preset area comprising the scene where the to-be-positioned vehicle is located, a position-orientation matching the local semantic information in the preset area as a position-orientation of the to-be-positioned vehicle.

In an optional embodiment, performing semantic segmentation on the aerial view to obtain local semantic information of a scene where the to-be-positioned vehicle is located, includes:
performing semantic segmentation on the aerial view to obtain a semantic point cloud of the scene where the to-be-positioned is located as local semantic information, wherein the semantic point cloud is used to represent geometric information and semantic information of each of spatial points, and the semantic information represents an identification type corresponding to each of spatial points;
determining, according to global semantic information of a preset area comprising the scene where the to-be-positioned vehicle is located, a position-orientation matching the local semantic information in the preset area as a position-orientation of the to-be-positioned vehicle, comprises:
   matching, based on the geometric information and semantic information represented by the local semantic information, the local semantic information with the global semantic information of a preset area to obtain a position-orientation matching the local semantic information in the preset area as the position-orientation of the to-be-positioned vehicle, the global semantic information is a semantic point cloud of the preset area.

In an optional embodiment, the identification type includes: a lane line, a parking space frame, a stop line, a speed bump, a road arrow, and a parking space number.

In an optional embodiment, the around-view camera includes a plurality of fish-eye cameras, and the plurality of fish-eye cameras are respectively set in different directions of the to-be-positioned vehicle for capturing images in corresponding directions;
before performing semantic segmentation on the aerial view to obtain local semantic information of a scene where the to-be-positioned vehicle is located, the method includes:
   transforming and splicing, according to a principle of inverse perspective transformation, the images captured by the plurality of fish-eye cameras, to obtain an aerial view of the scene where the to-be-positioned vehicle is located.
   In an optional embodiment, the to-be positioned vehicle is further provided with a position-orientation sensor for measuring relative position-orientations of the to-be-positioned vehicle at different time nodes;
performing semantic segmentation on the aerial view to obtain local semantic information of a scene where the to-be-positioned vehicle is located, comprises:
   performing semantic segmentation on aerial views captured at multiple time nodes comprising current moment, to obtain pieces of semantic information of scenes where the to-be-positioned vehicle is located at the multiple time nodes;
   obtaining sensing relative position-orientations at the multiple time nodes, where the sensing relative position-orientations are obtained by reading the position-orientation sensor;
   superimposing the pieces of semantic information of the scenes where the to-be-positioned vehicle is located at the multiple time nodes based on the sensing relative position-orientations of the to-be-positioned vehicle at the multiple time nodes to obtain a superimposition result;
   filtering the superposition result to obtain semantic information of the scene where the to-be-positioned vehicle is located in a time window comprising the current moment as local semantic information.

In a possible embodiment, after performing semantic segmentation on aerial views captured at multiple time nodes comprising current moment, to obtain pieces of semantic information of scenes where the to-be-positioned vehicle is located at the multiple time nodes, the method further comprises:
obtaining visual relative position-orientations at multiple time nodes, the visual relative position-orientations are obtained by matching pieces of semantic information of multiple time nodes;
fusing the sensing relative position-orientations and the visual relative position-orientations to obtain fusion relative position-orientations;
superimposing the pieces of semantic information of the scenes where the to-be-positioned vehicle is located at the multiple time nodes based on the sensing relative position-orientations of the to-be-positioned vehicle at the multiple time nodes to obtain a superimposition result, comprises:
   superimposing the pieces of semantic information of the scenes where the to-be-positioned vehicle is located at the multiple time nodes based on the fusion relative position-orientations of the to-be-positioned vehicle at the multiple time nodes to obtain a superimposition result.

In a possible embodiment, determining, according to global semantic information of a preset area comprising the scene where the to-be-positioned vehicle is located, a position-orientation matching the local semantic information in the preset area as a position-orientation of the to-be-positioned vehicle, comprises:
estimating, based on determined locations of the to-be-positioned vehicle at historical moments, a location of the to-be-positioned vehicle at current moment as a estimated location;
determining, according to a priori semantic information within a preset range of the estimated position in the preset area, a position-orientation matching the local semantic information in the preset range as the position-orientation of the to-be-positioned vehicle.

The memory mentioned in the above electronic device can include a random access memory (RAM), or can include a non-volatile memory (NVM), for example at least one disk memory. Optionally, the memory can also be at least one storage device located away from the processor described above.

The processor described above may be a general-position-orientation processor, such as a central processing unit (CPU), a network processor (NP); it may also be a digital signal processor (DSP), an application specific integrated circuit (ASIC), field-programmable gate array (FPGA) or other programmable logic devices, discrete gate or transistor logic devices, discrete hardware components.

In yet another embodiment according to the present application, there is also provided a computer-readable storage medium which stores instructions that, when running on a computer, cause the computer to perform the method for determining position-orientation of a vehicle described in any one of the embodiments described above.

In still another embodiment according to the present application, there is also provided a computer program product with instructions that, when running on a computer, cause the computer to perform the method for determining position-orientation of a vehicle described in any one of the embodiments described above.

In the aforementioned embodiments, it may be implemented in whole or in part by software, hardware, firmware, or any combination thereof. When implemented by software, it may be implemented in whole or in part in the form of a computer program product. The computer program product includes one or more computer instructions. The processes or functions described in accordance with the embodiments of the present application is produced in whole or in part, when the computer program instructions are loaded and executed on a computer. The computer may be a general-position-orientation computer, a dedicated computer, a computer network, or other programmable device. The computer instructions may be stored in a computer-readable storage medium or may be transmitted from one computer-readable storage medium to another computer-readable storage medium, for example, the computer instructions may be transmitted from a web site, a computer, a server, or a data center to another web site, another computer, another server, or another data center via a cable (such as a coaxial cable, an optical fiber, a digital subscriber line (DSL)) or wireless (such as infrared, wireless, microwave, etc.). The computer-readable storage medium may be any available medium that may be accessed by a computer or a data storage device such as a server or a data center containing one or more available medium integrations. The available media may be magnetic media (such as floppy disks, hard disks, magnetic tapes), optical media (such as DVDs), or semiconductor media (such as solid state disk (SSD)), etc.

The embodiments of the present application provides a vehicle position-orientation around-view system, which includes: an around-view camera and at least one processor, the around-view camera is configured for capturing an aerial view of the scene where the to-be-positioned vehicle is located, the processor is configured for: performing semantic segmentation on the aerial view to obtain local semantic information of the scene where the to-be-positioned vehicle is located; determining, according to global semantic information of a preset area comprising the scene where the to-be-positioned vehicle is located, a position-orientation matching the local semantic information in the preset area as a position-orientation of the to-be-positioned vehicle.

The system may also include a display for displaying an aerial view of the scene where the to-be-positioned vehicle is located, and or, a map.

The map displayed on the display may include at least one of the following information: semantic information, the position-orientation of the to-be-positioned vehicle, and the image of the vehicle where an around-view camera is located.

The aerial view may also include at least one of the following information: semantic information, the position-orientation of the to-be-positioned vehicle, and the image of the vehicle where an around-view camera is located.

Using the embodiments of the present application in basements, indoors, multi-storey buildings, and scenes with weak GPS signals, the vehicle position-orientation can be determined more accurately, which further makes map navigation more accurate, enables more accurate positioning and navigation, and realizes assisted driving.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

All the embodiments are described in corresponding ways, same or similar parts in each of the embodiments can be referred to one another, and the parts emphasized are differences to other embodiments. It should be noted that, for embodiments of the apparatus, electronic device, system, computer readable storage medium, and computer program product, since they are substantially similar to the embodiments of the method, their description is relatively simple, and for the related aspects, one only needs to refer to portions of the description of the embodiments of the method.

The description is only for preferred embodiments of the present application, and embodiments are not so limited. Any modifications, substitutions, improvements, etc., which are made within the spirit and principles of the present application, will fall into the protection scope of the present application.

## Claims

1. A method for determining position-orientation of a vehicle, wherein, a to-be-positioned vehicle is provided with an around-view camera, which is used to capture an aerial view of a scene where the to-be-positioned vehicle is located, the method comprises:
performing semantic segmentation on the aerial view to obtain local semantic information of the scene where the to-be-positioned vehicle is located;
determining, according to global semantic information of a preset area comprising the scene where the to-be-positioned vehicle is located, a position-orientation matching the local semantic information in the preset area as a position-orientation of the to-be-positioned vehicle.

2. The method of claim 1, wherein, performing semantic segmentation on the aerial view to obtain local semantic information of the scene where the to-be-positioned vehicle is located comprises:
performing semantic segmentation on the aerial view to obtain a semantic point cloud of the scene where the to-be-positioned is located as local semantic information, wherein the semantic point cloud is used to represent geometric information and semantic information of each of spatial points, and the semantic information represents an identification type corresponding to each of spatial points;
determining, according to global semantic information of a preset area comprising the scene where the to-be-positioned vehicle is located, a position-orientation matching the local semantic information in the preset area as a position-orientation of the to-be-positioned vehicle, comprises:
matching, based on the geometric information and semantic information represented by the local semantic information, the local semantic information with the global semantic information of a preset area to obtain a position-orientation matching the local semantic information in the preset area as the position-orientation of the to-be-positioned vehicle, the global semantic information is a semantic point cloud of the preset area.

3. The method of claim 2, wherein, the identification type comprises: a lane line, a parking space frame, a stop line, a speed bump, a road arrow, and a parking space number.

4. The method of claim 1, wherein, the around-view camera comprises a plurality of fish-eye cameras, and the plurality of fish-eye cameras are respectively set in different directions of the to-be-positioned vehicle for capturing images in corresponding directions;
before performing semantic segmentation on the aerial view to obtain local semantic information of a scene where the to-be-positioned vehicle is located, the method further comprises:
transforming and splicing, according to a principle of inverse perspective transformation, the images captured by the plurality of fish-eye cameras, to obtain an aerial view of the scene where the to-be-positioned vehicle is located.

5. The method of claim 1, wherein, the to-be positioned vehicle is further provided with a position-orientation sensor for measuring relative position-orientations of the to-be-positioned vehicle at different time nodes;
performing semantic segmentation on the aerial view to obtain local semantic information of a scene where the to-be-positioned vehicle is located, comprises:
performing semantic segmentation on aerial views captured at multiple time nodes comprising current moment, to obtain pieces of semantic information of scenes where the to-be-positioned vehicle is located at the multiple time nodes;
obtaining sensing relative position-orientations at the multiple time nodes, where the sensing relative position-orientations are obtained by reading the position-orientation sensor;
superimposing the pieces of semantic information of the scenes where the to-be-positioned vehicle is located at the multiple time nodes based on the sensing relative position-orientations of the to-be-positioned vehicle at the multiple time nodes to obtain a superimposition result;
filtering the superposition result to obtain semantic information of the scene where the to-be-positioned vehicle is located in a time window comprising the current moment as local semantic information.

6. The method of claim 5, wherein, after performing semantic segmentation on aerial views captured at multiple time nodes comprising current moment, to obtain pieces of semantic information of scenes where the to-be-positioned vehicle is located at the multiple time nodes, the method further comprises:
obtaining visual relative position-orientations at multiple time nodes, the visual relative position-orientations are obtained by matching pieces of semantic information of multiple time nodes;
fusing the sensing relative position-orientations and the visual relative position-orientations to obtain fusion relative position-orientations;
superimposing the pieces of semantic information of the scenes where the to-be-positioned vehicle is located at the multiple time nodes based on the sensing relative position-orientations of the to-be-positioned vehicle at the multiple time nodes to obtain a superimposition result, comprises:
superimposing the pieces of semantic information of the scenes where the to-be-positioned vehicle is located at the multiple time nodes based on the fusion relative position-orientations of the to-be-positioned vehicle at the multiple time nodes to obtain a superimposition result.

7. The method of claim 1, wherein, determining, according to global semantic information of a preset area comprising the scene where the to-be-positioned vehicle is located, a position-orientation matching the local semantic information in the preset area as a position-orientation of the to-be-positioned vehicle, comprises:
estimating, based on determined locations of the to-be-positioned vehicle at historical moments, a location of the to-be-positioned vehicle at current moment as a estimated location;
determining, according to a priori semantic information within a preset range of the estimated position in the preset area, a position-orientation matching the local semantic information in the preset range as the position-orientation of the to-be-positioned vehicle.

8. An apparatus for determining position-orientation of a vehicle, wherein, a to-be-positioned vehicle is provided with an around-view camera, which is used to capture an aerial view of a scene where the to-be-positioned vehicle is located, the apparatus comprises:
a semantic segmentation module, configured for performing semantic segmentation on the aerial view to obtain local semantic information of a scene where the to-be-positioned vehicle is located;
a semantic matching module, configured for determining, according to global semantic information of a preset area comprising the scene where the to-be-positioned vehicle is located, a position-orientation matching the local semantic information in the preset area as a position-orientation of the to-be-positioned vehicle.

9. The apparatus of claim 8, wherein, the semantic segmentation module is specifically configured for performing semantic segmentation on the aerial view to obtain a semantic point cloud of the scene where the to-be-positioned is located as local semantic information, wherein the semantic point cloud is used to represent geometric information and semantic information of each of spatial points, and the semantic information represents an identification type corresponding to each of spatial points;
the semantic matching module is specifically configured for matching, based on the geometric information and semantic information represented by the local semantic information, the local semantic information with the global semantic information of a preset area to obtain a position-orientation matching the local semantic information in the preset area as the position-orientation of the to-be-positioned vehicle, the global semantic information is a semantic point cloud of the preset area.

10. The apparatus of claim 9, wherein, the identification type comprises: a lane line, a parking space frame, a stop line, a speed bump, a road arrow, and a parking space number.

11. The apparatus of claim 8, wherein, the around-view camera comprises a plurality of fish-eye cameras, and the plurality of fish-eye cameras are respectively set in different directions of the to-be-positioned vehicle for capturing images in corresponding directions;
the apparatus further comprises an image splicing module, which is configured for, before performing semantic segmentation on the aerial view to obtain local semantic information of a scene where the to-be-positioned vehicle is located,
transforming and splicing, according to a principle of inverse perspective transformation, the images captured by the plurality of fish-eye cameras, to obtain an aerial view of the scene where the to-be-positioned vehicle is located.

12. The apparatus of claim 8, wherein, the to-be positioned vehicle is further provided with a position-orientation sensor for measuring relative position-orientations of the to-be-positioned vehicle at different time nodes;
the semantic segmentation module is specifically configured for performing semantic segmentation on aerial views captured at multiple time nodes comprising current moment, to obtain pieces of semantic information of the scenes where the to-be-positioned vehicle is located at the multiple time nodes;
obtaining sensing relative position-orientations at the multiple time nodes, where the sensing relative position-orientations are obtained by reading the position-orientation sensor;
superimposing the pieces of semantic information of the scenes where the to-be-positioned vehicle is located at the multiple time nodes based on the sensing relative position-orientations of the to-be-positioned vehicle at the multiple time nodes to obtain a superimposition result;
filtering the superposition result to obtain semantic information of the scene where the to-be-positioned vehicle is located in a time window comprising the current moment as local semantic information.

13. The apparatus of claim 12, wherein, the semantic segmentation module is further configured for, after performing semantic segmentation on aerial views captured at multiple time nodes comprising current moment to obtain pieces of semantic information of the scenes where the to-be-positioned vehicle is located at the multiple time nodes, obtaining visual relative position-orientations at multiple time nodes, the visual relative position-orientations are obtained by matching pieces of semantic information of multiple time nodes;
fusing the sensing relative position-orientations and the visual relative position-orientations to obtain fusion relative position-orientations;
the semantic segmentation module is specifically configured for superimposing the pieces of semantic information of the scenes where the to-be-positioned vehicle is located at the multiple time nodes based on the fusion relative position-orientations of the to-be-positioned vehicle at the multiple time nodes to obtain a superimposition result.

14. The apparatus of claim 8, wherein, the semantic matching module is specifically configured for estimating, based on determined locations of the to-be-positioned vehicle at historical moments, a location of the to-be-positioned vehicle at current moment as a estimated location;
determining, according to a priori semantic information within a preset range of the estimated position in the preset area, a position-orientation matching the local semantic information in the preset range as a position-orientation of the to-be-positioned vehicle.

15. A vehicle position-orientation around-view system, comprising: an around-view camera and at least one processor, the around-view camera is configured for capturing an aerial view of a scene where the to-be-positioned vehicle is located, the processor is configured for: performing semantic segmentation on the aerial view to obtain local semantic information of the scene where the to-be-positioned vehicle is located; determining, according to global semantic information of a preset area comprising the scene where the to-be-positioned vehicle is located, a position-orientation matching the local semantic information in the preset area as a position-orientation of the to-be-positioned vehicle.

16. An electronic device, comprising:
a memory, configured for storing computer programs;
the processor is configured for performing the steps of the method of any one of claims 1 to 7 when executing the programs stored on the memory.

17. A computer readable storage medium, wherein the computer readable storage medium stores instructions thereon which, when executed by a processor, cause the processor to implement steps of the method of any one of claims 1-7.
